Europäisches Patentamt

European Patent Office

Office européen des brevets

(11) Numéro de publication: **0 539 288 B1**

(12) **FASCICULE DE BREVET EUROPEEN**

(45) Date de publication de fascicule du brevet: **29.03.95**   (51) Int. Cl.$^6$: **B21K 27/06**, B23D 33/00

(21) Numéro de dépôt: **92402874.9**

(22) Date de dépôt: **21.10.92**

(54) **Installation de forgeage à chaud de pièces à partir de barres.**

(30) Priorité: **22.10.91 FR 9113024**

(43) Date de publication de la demande:
**28.04.93 Bulletin 93/17**

(45) Mention de la délivrance du brevet:
**29.03.95 Bulletin 95/13**

(84) Etats contractants désignés:
**AT BE CH DE DK ES FR GB GR IE IT LI LU NL PT SE**

(56) Documents cités:
**GB-A- 1 058 570**
**GB-A- 2 059 325**
**US-A- 3 972 211**

(73) Titulaire: **ASCOMETAL**
**Immeuble Elysées-La Défense**
**La Défense 4, 29 Le Parvis**
**F-92800 Puteaux (FR)**

(72) Inventeur: **Rit, Jean-Paul**
**54, rue de Sierck,**
**Rettel**
**F-57480 Sierck (FR)**
Inventeur: **Hoffbeck, Denise**
**10, Route Nationale,**
**St Uckange**
**F-57110 Yutz (FR)**
Inventeur: **Morgen, Paul**
**78, rue du trou du lièvre,**
**Metz**
**F-57000 Vallieres (FR)**

(74) Mandataire: **Lanceplaine, Jean-Claude et al**
**CABINET LAVOIX**
**2, Place d'Estienne d'Orves**
**F-75441 Paris Cédex 09 (FR)**

Rank Xerox (UK) Business Services
(3.10/3.09/3.3.3)

## Description

La présente invention a pour objet une installation de forgeage à chaud de pièces à partir de barres.

On connaît une installation de forgeage à chaud de pièces à partir de barres qui comprend un moyen de chauffage des barres, par exemple à l'aide d'un four à induction, un moyen de déplacement longitudinal des barres dans ladite installation, une cisaille débitant à chaud des lopins à une longueur déterminée, destinés à être forgés par matriçage, et comportant une butée de mise en longueur du lopin et un moyen de maintien du lopin découpé pour son orientation vers une matrice de forgeage, un moyen de détection des extrémités des barres et un moyen de rejet des lopins ayant une longueur inférieure à la longeur prévue (voir par exemple GB-A-2059325).

Cette installation détecte les extrémités des barres en repérant un espace existant entre les barres chauffées à environ deux ou trois longueurs de barres en amont de la cisaille.

Le moyen de repérage des extrémités des barres comprend une caméra optique ou un capteur à couplage de charge ou bien encore des capteurs photoélectriques qui mettent en évidence l'espace entre lesdites barres.

Cette installation a donc pour principal inconvénient de ne détecter que les extrémités des barres.

Or, le jeu détecté, existant entre les barres à une distance de deux ou trois longueurs de barre avant la cisaille, est généralement absorbé par glissement du fait que le déplacement des barres est un déplacement à vitesse constante, alors que la dernière barre en cisaillement se déplace séquentiellement par mise en butée avant le cisaillage.

L'éloignement et le glissement des barres venant en appui sur la barre en découpe entraînent une erreur importante sur la détermination de la longueur et impose en moyenne, par mesure de sécurité qu'au moins trois lopins soient rejetés par barre, et parfois cinq ou sept.

Le rejet de ces lopins génère donc une perte importante de matière, au moins trois opérations de forgeage à vide par barre et une diminution du rendement en nombre de pièces forgées à l'heure.

La présente invention a pour but de remédier à ces inconvénients en proposant une installation qui assure une perte en chute de matière minimale et de ce fait une économie de matière et un gain de production.

Ce but est atteint par une installation de forgeage à chaud de pièces à partir de barres, comprenant un moyen de chauffage des barres, un moyen de déplacement longitudinal des barres dans ladite installation, une cisaille débitant à chaud des lopins à une longueur l destinés à être forgés par matriçage et comportant une butée de mise en longueur du lopin et un moyen de maintien du lopin découpé pour son orientation vers une matrice de forgeage, un moyen de détection des extrémités des barres et un moyen de rejet des lopins ayant une longueur inférieure à l, caractérisée en ce que le moyen de détection est composé d'au moins un capteur de l'image des extrémités des barres accolées ou non accolées, placé à une distance L de la cisaille et un calculateur déterminant le nombre n = L/l de lopins à partir de l'extrémité détectée et associé, d'une part, audit capteur et, d'autre part, à un moyen de mesure de la longueur L1 des barres, ledit calculateur commandant le moyen de rejet des lopins ayant une longueur inférieure à l ou formé de deux extrémités de barres accolées.

Selon d'autres caractéristiques de l'invention :
- le capteur de l'image des extrémités des barres est composé d'au moins une caméra,
- le capteur de l'image des extrémités des barres est composé de deux caméras,
- le moyen de détection comprend en outre un capteur de validation de l'opération de forgeage,
- le moyen de mesure de la longueur des barres est composé d'au moins un galet calibré en contact non glissant avec lesdites barres,
- le calculateur comprend un moyen de mémorisation des anomalies et des incidents détectés,
- l'installation comporte un capteur de détection du basculement des barres placé avant la cisaille et après le moyen de déplacement longitudinal desdites barres.

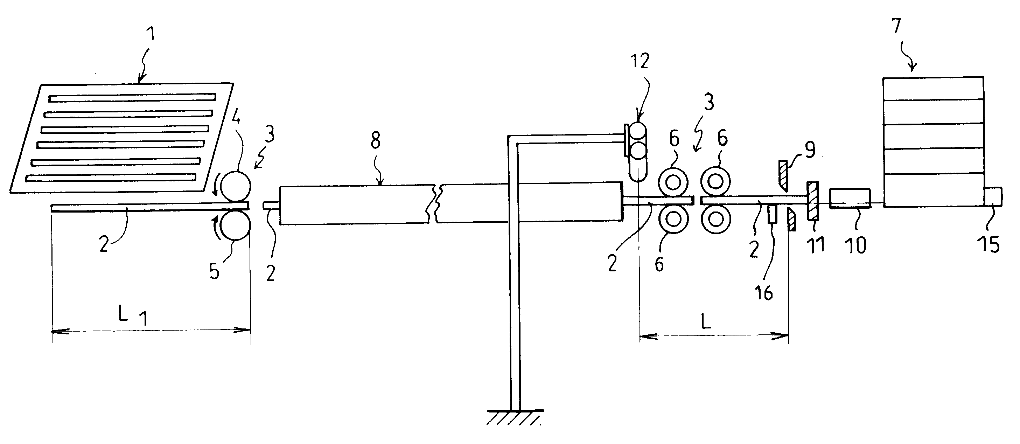

D'autres caractéristiques et avantages de l'invention apparaîtront à la lecture de la description qui va suivre donnée uniquement à titre d'exemple et faite en référence à la figure unique annexée qui représente un schéma d'une installation de forgeage à chaud de pièces à partir de barres, selon la présente invention.

L'installation représentée schématiquement à la figure unique comprend, d'une part, un système de distribution 1 des barres 2 les unes à la suite des autres sur un moyen 3 de déplacement longitudinal formé d'un chemin de roulement composé d'une suite de galets 4, 5 et 6 d'entraînement et de guidage de ces barres et, d'autre part, d'une matrice 7 de forgeage simultané de plusieurs lopins découpés à partir desdites barres 2.

Entre le système de distribution 1 des barres 2 et la matrice de forgeage 7, l'installation comprend, dans le sens de déplacement des barres 2, un moyen de mesure de la longueur L1 des barres 2 constitué par exemple par le galet 5 calibré, entraîné en rotation et en contact non glissant avec les barres 2, puis un moyen 8 de chauffage des barres 2 comme par exemple un four de chauffage par induction, une cisaille 9 de découpe des barres 2 en lopins de longueur l et un moyen 10 de rejet des lopins ayant une longueur inférieure à l ou formés de deux extrémités de barres accolées.

Ce moyen 10 de rejet est constitué par exemple par un doigt pivotant.

Par ailleurs, la cisaille 9 est équipée d'une butée escamotable 11 sur laquelle une extrémité des barres 2 vient en appui pendant le cisaillage de la barre correspondante et un moyen, non représenté, de maintien du lopin découpé pour son orientation vers la matrice de forgeage 7.

A environ une longueur L de barres à débiter et de préférence avant les deux paires de galets 6, l'installation comporte un moyen de détection des extrémités des barres constitué par un capteur 12 de l'image des extrémités desdites barres, comme par exemple au moins une caméra.

La ou les caméras 12 et le moyen 5 de mesure de la longueur L1 des barres 2 sont associés à un calculateur, non représenté, validant la position de chaque barre par rapport à la cisaille 9.

Le calculateur comprend un moyen de mémorisation des anomalies et des incidents détectés.

Par ailleurs, l'installation comporte un capteur 16 de détection du basculement des barres 2 placé avant la cisaille 9 et après le moyen 3 de déplacement longitudinal desdites barres.

Le capteur 16 est un moyen complémentaire de repérage lorsque la barre 2 en extrémité n'est plus soutenue que par deux galets 6 du moyen 3 de déplacement longitudinal desdites barres 2.

Les barres 2 sont distribuées sur le chemin de roulement 3 et le galet 5 mesure la longueur L1 de chaque barre.

Les barres 2 sont chauffées et passent devant la ou les caméras 12 placées à une longueur L de la cisaille 9 et qui détectent les extrémités accolées ou non accolées desdites barres 2.

La cisaille 9 découpe les barres 2 en lopins de longueur l et, entre chaque cisaillage, la butée 11 s'escamote pour l'évacuation du lopin.

En fonction des informations fournies par la ou les caméras 12 et par le moyen 5 de la mesure de la longueur des barres 2, le calculateur détermine le nombre $n = L/l$ de lopins à partir de l'extrémité détectée.

En fonction de la position des extrémités des barres par rapport aux deux extrémités du lopin de longueur l et après analyse par le calculateur, le moyen de rejet 10 rejettera soit un lopin, soit au maximum deux lopins lorsque l'extrémité des barres sera analysée trop proche d'une des extrémités du lopin défectueux et repéré, c'est à dire ayant une longueur inférieure à l ou formé de deux extrémités de barres accolées.

Ainsi, seul est rejeté un lopin, ou au plus deux lopins, ce qui réduit de façon conséquente le volume des chutes de matière.

Afin d'assurer une cohérence de la validation, il est placé sur la matrice de forgeage 7 un capteur 15 comme par exemple un capteur piézoélectrique assurant qu'effectivement le moyen de rejet 10 a bien rejeté la pièce, ce qui correspond sur la matrice de forgeage à une opération de forgeage à vide. Le capteur 15 est également relié au calculateur.

L'installation selon l'invention permet donc de détecter les extrémités de barres chauffées, accolées ou non accolées, parfois même soudées par appui de l'une sur l'autre, et cela avec une précision sur la longueur telle que seul les lopins de longueur inférieure à l ou composés de deux extrémités de barres soient rejetés.

De plus, on valide et on corrèle l'opération de forgeage à vide correspondant à un manque d'un lopin préalablement rejeté.

On peut également au moyen des deux caméras de détection des extrémités des barres, mesurer le diamètre ou le ou les côtés des barres pour déterminer le volume de chaque lopin.

L'installation selon l'invention assure donc une perte en chute de matière minimale, un nombre de forgeage à vide également minimum, donc une économie de matière, de temps et un gain en production de pièces.

**Revendications**

1. Installation de forgeage à chaud de pièces à partir de barres (2), comprenant :
   - un moyen (8) de chauffage des barres (2),
   - un moyen (3) de déplacement longitudinal des barres (2) dans ladite installation,
   - une cisaille (9) débitant à chaud des lopins à une longueur l, destinés à être forgés par matriçage, et comportant une butée (11) de mise en longueur du lopin et un moyen de maintien du lopin découpé pour son orientation vers une matrice de forgeage (7),
   - un moyen (12) de détection des extrémités des barres,
   - et un moyen (10) de rejet des lopins ayant une longueur inférieure à l,
   caractérisée en ce que le moyen de détection est composé d'au moins un capteur (12) de l'image des extrémités des barres accolées ou non accolées, placé à une distance L de la cisaille (9) et un calculateur déterminant le nombre $n = L/l$ de lopins à partir de l'extrémité détectée et associé, d'une part, audit capteur (12) et, d'autre part, à un moyen (5) de mesure de la longueur L1 des barres, ledit calculateur commandant le moyen (10) de rejet des lopins ayant une longueur inférieure à l ou formés de deux extrémités de barres accolées.

2. Installation selon la revendication 1, caractérisée en ce que le capteur (12) de l'image des extrémités des barres (2) est composé d'au moins une caméra.

3. Installation selon la revendication 1, caractérisée en ce que le capteur (12) de l'image des extrémités des barres est composé de deux caméras.

4. Installation selon la revendication 1, caractérisée en ce que le moyen de détection comprend, en outre, un capteur (15) de validation de l'opération de forgeage.

5. Installation selon la revendication 1, caractérisée en ce que le moyen de mesure de la longueur L1 des barres est composé d'au moins un galet (5) calibré et en contact non glissant avec lesdites barres (2).

6. Installation selon la revendication 1, caractérisée en ce que le calculateur comprend un moyen de mémorisation des anomalies et des incidents détectés.

7. Installation selon la revendication 1, caractérisée en ce qu'elle comporte un capteur (16) de détection du basculement des barres (2) placé avant la cisaille (9) et après le moyen (3) de déplacement longitudinal desdites barres.

## Claims

1. Installation for the hot forging of workpieces from bars (2), comprising a means (8) for heating the bars (2), a means (3) for the longitudinal displacement of the bars (2) in said installation, a shear (9) delivering hot blooms with a length l to be die forged and having an abutment (11) for bringing to length the bloom and a means for retaining the cut bloom for its orientation to a forging die (7), a means (12) for detecting the ends of the bars and a means (10) for rejecting blooms having a length below l, characterized in that the detection means is formed from at least one sensor (12) of the image of the ends of the joined or unjoined bars, placed at a distance L from the shear (9) and a computer determining the number $n = L/l$ of blooms as from the detected end and associated on the one hand with the said sensor (12) and on the other with a means (5) for measuring the length L1 of the bars, said computer controlling the means (10) for rejecting blooms having a length below l or formed from two ends of joined bars.

2. Installation according to claim 1, characterized in that the sensor (12) of the image of the ends of the bars (2) is constituted by at least one camera.

3. Installation according to claim 1, characterized in that the sensor (12) of the image of the ends of the bars is constituted by two cameras.

4. Installation according to claim 1, characterized in that the detection means also incorporates a transducer (15) for validating the forging operation.

5. Installation according to claim 1, characterized in that the means for measuring the length L1 of the bars is constituted by at least one calibrated roller (5) in non-sliding contact with said bars (2).

6. Installation according to claim 1, characterized in that the computer incorporates a means for storing detected incidents and anomalies.

7. Installation according to claim 1, characterized in that it comprises a sensor (16) for detecting the tilting of bars (2) positioned upstream of the shear (9) and downstream of the means (3) for the longitudinal displacement of said bars.

## Patentansprüche

1. Anlage zum Warmschmieden von Werkstükken ausgehend von Stäben (2) mit
   - einer Einrichtung (8) zum Erhitzen der Stäbe (2),
   - einer Einrichtung (3) zum Längsverschieben der Stäbe (2) in der Anlage,
   - einer Abschereinrichtung (9), die warme, zum Gesenkschmieden bestimmte Rohlinge mit einer Länge l abgibt und einen Anschlag (11) zur Längeneinstellung des Rohlings sowie eine Einrichtung zur Aufrechterhaltung der Orientierung des abgescherten Rohlings in bezug auf ein Gesenk (7) aufweist,
   - einer Detektionseinrichtung (12) für die Enden der Stäbe und
   - einer Zurückweisungseinrichtung (10) für Stäbe, die eine geringere Länge als l besitzen,

   dadurch gekennzeichnet, daß die Detektionseinrichtung aus mindestens einem Bildaufnehmer (12) für die Enden der aneinandergefügten oder nicht aneinandergefügten Stäbe, die in einem Abstand L von der Abschereinrichtung (9) angeordnet ist, und einem Rechner besteht, der die Zahl n = L/l der Rohlinge ausgehend von dem detektierten Ende ermittelt und einerseits an den Aufnehmer (12) und andererseits an eine Einrichtung (5) zum Messen der Länge L1 der Stäbe angeschlossen ist, wobei der Rechner die Zurückweisungseinrichtung (10) für die Rohlinge, deren Länge geringer ist als l oder die zwei Enden von aneinandergefügten Stäben aufweisen, steuert.

2. Anlage nach Anspruch 1, dadurch gekennzeichnet, daß der Bildaufnehmer (12) der Enden der Stäbe (2) aus mindestens einer Kamera besteht.

3. Anlage nach Anspruch 1, dadurch gekennzeichnet, daß der Bildaufnehmer (12) der Enden der Stäbe aus zwei Kameras besteht.

4. Anlage nach Anspruch 1, dadurch gekennzeichnet, daß die Detektionseinrichtung unter anderem einen Sensor (15) zur Bestätigung des Schmiedevorganges aufweist.

5. Anlage nach Anspruch 1, dadurch gekennzeichnet, daß die Messeinrichtung für die Länge L1 der Stäbe aus mindestens einer kalibrierten Rolle (5) besteht die sich mit den Stäben (2) im Nichtgleitkontakt befindet.

6. Anlage nach Anspruch 1, dadurch gekennzeichnet, daß der Rechner eine Speichereinrichtung für Anomalien und detektierte Ereignisse aufweist.

7. Anlage nach Anspruch 1, dadurch gekennzeichnet, daß sie einen Sensor (16) aufweist, der das Kippen von vor der Abschereinrichtung (9) und nach der Längsverschiebungseinrichtung (3) für die Stäbe angeordneten Stäbe detektiert.